# EUROPÄISCHE PATENTSCHRIFT

(11) **EP 0 336 051 B1**
(45) Veröffentlichungstag und Bekanntmachung des Hinweises auf die Patenterteilung: **08.12.1993**
(21) Anmeldenummer: 89100133.1
(22) Anmeldetag: 05.01.1989
(51) Int. Cl.: G08C 19/30, G05B 19/04, D06F 33/02

(54) **Schaltungsanordnung mit einem elektromechanischen Programmschaltwerk und einer elektronischen Auswerteschaltung eines Geräts**
Circuit arrangement with an electro-mechanic programmed switching device and electronic evaluation circuit for apparatus
Circuit avec un dispositif commutateur à programme électromécanique et un circuit d'évaluation électronique pour appareil

(30) Priorität: 02.04.1988 DE 3811295
(43) Veröffentlichungstag der Anmeldung: 11.10.1989
(73) Patentinhaber: AKO-Werke GmbH & Co, D-7988 Wangen/Allgäu (DE)
(72) Erfinder: Schotten, Henno, Dipl.-Ing., D-7989 Argenbühl-Ratzenried (DE); Albicker, Fritz, Dipl.-Ing., D-7988 Wangen/Allgäu (DE); Natterer, Helmut, D-7989 Argenbühl 1 (DE)
(74) Vertreter: Gaiser, Hartmut, Dipl.-Ing.

(56) Entgegenhaltungen:
- EP-A- 0 048 848
- EP-A- 0 068 266
- EP-A- 0 227 617
- DE-A- 1 052 518
- FR-A- 2 550 356
- GB-A- 1 146 832

## Beschreibung

Die Erfindung betrifft eine Schaltungsanordnung nach dem Oberbegriff des Anspruchs 1.

In der DE-OS 33 03 992 ist eine hybride Schaltungsanordnung für eine Wäschebehandlungs- oder Geschirrspülmaschine beschrieben, die mit einem elektromechanischen Schrittschaltwerk und einer elektronischen Mikrocomputer-Steuerung arbeitet.

Wenn in einer Schaltungsanordnung der genannten Art ein elektromechanisches Programmschaltwerk, das über Nockenscheiben zahlreiche Schalterstellungen, die jeweils Sollwerte für Funktionsabläufe darstellen, und eine die jeweiligen Sollwerte erfassende elektronische Auswerteschaltung, beispielsweise ein Mikroprozessor, vorgesehen sind, dann sind zur Übertragung der Sollwerte auf die Auswerteschaltung eine Vielzahl von Leitungen nötig. Dies ist unerwünscht. Übliche Verfahren zur Übertragung mehrerer Signale über eine einzige Leitung sind nicht praktikabel, da deren Schaltungsaufwand und Störempfindlichkeit erheblich sind.

Eine Schaltungsanordnung nach dem Oberbegriff ist in der EP-A-0 227 617 beschrieben. Dort sind vier Schalter zur Einstellung von acht Steuersignalen oder zwei Schalter zur Einstellung von drei Steuersignalen vorgesehen. Die Dekodierschaltung weist bei der EP-A-0 227 617 mehrere Ausgänge auf, die an einer Auswerteschaltung liegen.

In der FR-A-2 550 356 ist eine Steuereinrichtung beschrieben, bei der mittels zwei Schaltern vier Steuersignale erzeugt werden können. Dabei werden je nach der Schalterstellung die Vollwellen, die positiven Halbwellen, die negativen Halbwellen oder keine Halbwellen als Steuersignale verwendet.

Aufgabe der Erfindung ist es, eine Schaltungsanordnung der eingangs genannten Art vorzuschlagen, bei der die Anzahl der zur Übertragung der Sollwerte nötigen Leitungen reduziert ist und bei der eine weitgehend störungsfreie Übertragung gewährleistet ist.

Erfindungsgemäß ist obige Aufgabe bei einer Schaltungsanordnung der eingangs genannten Art durch die kennzeichnenden Merkmale des Anspruchs 1 oder des Anspruchs 2 gelöst.

Dadurch ist erreicht, daß über die gleiche Leitung vier verschiedenen Sollwerten entsprechende Schalterstellungen übertragen werden können. Die Erfindung macht sich dabei zunutze, daß an den Schalter bzw. die Schalter im Programmschaltwerk eine Wechselspannung, insbesondere die Netzwechselspannung, gelegt ist, indem sie die positiven Halbwellen und die negativen Halbwellen in der Dekodierschaltung je für sich erfaßt. Durch die Synchronisierung der Auswerteschaltung mit der Wechselspannung ist gewährleistet, daß die den Halbwellen entsprechenden digitalen Signale zeitrichtig erkannt werden. Durch die Erfindung sind somit weniger Leitungen nötig, als bei einer üblichen binären Kodierung der Sollwerte. Dort wären zur Übertragung von beispielsweise vier Sollwerten zwei Leitungen nötig.

Dadurch, daß über die Leitung die Halbwellen der Netzwechselspannung übertragen werden, ist die Übertragung nicht anfällig gegen Störungen. Die Dekodierung ist von Schwankungen der Amplitude der Halbwellen unabhängig.

In bevorzugter Ausgestaltung der Erfindung liegen vor der Leitung am Programmschaltwerk für die Übertragung der Schalterstellungen umgekehrt gepolte Dioden. Diese sperren bzw. leiten die Halbwellen je nach den Schalterstellungen. Günstig dabei ist, daß somit am Programmschaltwerk für die Erfindung nur passive Bauelemente, nämlich die Dioden, nötig sind. Es braucht also keine Betriebs-Gleichspannung zum Programmschaltwerk geführt zu werden.

Die Dekodierung wird so vorgenommen, daß an der Auswerteschaltung für vier Schalterstellungen nur ein einziger Eingang nötig ist. Dies ist vorteilhaft, da Auswerteschaltungen, wie Mikroprozessoren, in ihren Kosten stark von der Anzahl der Anschlüsse abhängen. Bei einer üblichen binären Kodierung bzw. Dekodierung wären für die Übertragung der vier Schalterstellungen zwei Anschlüsse nötig.

In Weiterbildung der Erfindung können zwei Leitungen vorgesehen sein. Über diese sind sechzehn Schalterstellungen übertragbar. Bei der Verwendung von drei bzw. vier Leitungen lassen sich dementsprechend 64 bzw. 256 Schalterstellungen übertragen.

Weitere vorteilhafte Ausgestaltungen der Erfindung ergeben sich aus den Unteransprüchen und der folgenden Beschreibung von Ausführungsbeispielen. In der Zeichnung zeigen:
Figur 1 eine Schaltungsanordnung eines Geräts mit zwei Schaltern eines Programmschaltwerks und einer nicht erfindungsgemäßen Ausführung der Empfangsschaltung,
Figur 2 eine Tabelle der Signale der Dekodierschaltung in Bezug zu den Schalterstellungen und der Wechselspannung nach Figur 1,
Figur 3 die Schaltungsanordnung mit einem erfindungsgemäßen Ausführungsbeispiel der Dekodierschaltung an einem einzigen Anschluß der Auswerteschaltung,
Figur 4 ein weiteres Ausführungsbeispiel einer Figur 3 entsprechenden Dekodierschaltung,
Figur 5 eine Tabelle der Signale der Dekodierschaltungen nach den Figuren 3 oder 4 in Bezug zu den Schalterstellungen und den Wechselspannungshalbwellen,
Figur 6 eine Schaltungsanordnung mit vier Schaltern und zwei Leitungen und
Figur 7 eine Tabelle der Signale der Dekodierschaltung nach Figur 6 in Bezug auf die sechzehn Schalterstellungen und die Wechselspannungshalbwellen.

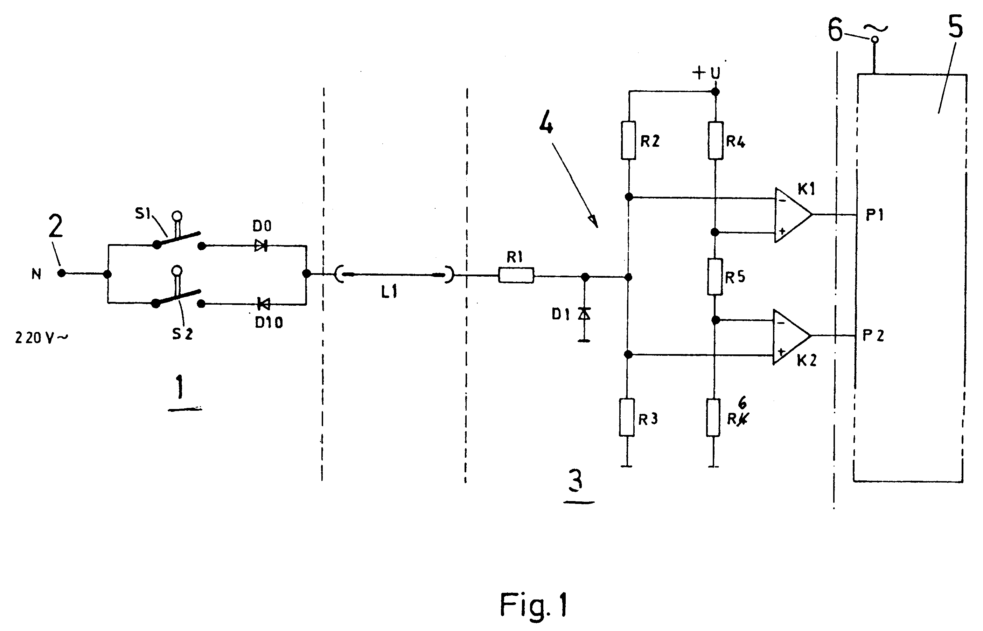

Ein Gerät, beispielsweise eine Waschmaschine, ein Wäschetrockner oder eine Geschirrspülmaschine weisen ein elektromechanisches Programmschaltwerk(1) auf. Dieses ist neben weiteren Schaltern mit zwei Schaltern(S1,S2) versehen, die durch Nockenscheiben des Programmschaltwerks(1) in vier verschiedene Schalterstellungen "0", "1", "2" und "3" zu bringen sind. An einem gemeinsamen Anschluß(2) der Schalter(S1,S2) liegt die Netzwechselspannung(N) an. Der Schalter(S1) ist über eine Diode(D0) mit einer Leitung(L1) verbunden. Der Schalter(S2) liegt über eine umgekehrt zur Diode(D0) gepolte Diode(D10) an der Leitung(L1). Die Leitung(L1) ist im Gerät zu einer Empfangsschaltung(3) verlegt und dort an eine Dekodierschaltung(4) angeschlossen, die bei Figur 1 zwei Eingängen(P1,P2) einer elektronischen Auswerteschaltung(5) vorgeschaltet ist. Die Auswerteschaltung(5) ist beispielsweise ein Mikroprozessor. Die Auswerteschaltung(5) ist über einen Eingang(6) mit der Netzwechselspannung(N) synchronisiert.

Die nicht erfindungsgemäße Dekodierschaltung(4) nach Figur 1 weist zwei Spannungskomparatoren(K1,K2) auf, deren Ausgänge an den Eingängen(P1 bzw. P2) liegen. Der negative Eingang des Komparators(K1) ist über einen Widerstand(R1) an die Leitung(L1) angeschlossen. Der positive Eingang des Komparators(K2) liegt ebenfalls über den Widerstand(R1) an der Leitung(L1). Eine Diode(D1) schließt die negativen Halbwellen gegen Masse kurz. Zwischen die Betriebsspannung(+U) und Masse ist ein Spannungsteiler aus Widerständen(R2,R3) geschaltet. Zwischen diesen liegen der negative Anschluß des Komparators(K1) und der positive Anschluß des Komparators(K2).

Zwischen die Betriebsspannung(+U) und Masse ist ein weiterer Spannungsteiler aus Widerständen(R4,R5,R6) geschaltet. Der positive Anschluß des Komparators(K1) liegt zwischen den Widerständen(R4,R5). Der negative Anschluß des Komparators(K2) liegt zwischen den Widerständen(R5,R6).

Die Arbeitsweise der beschriebenen Schaltung ist etwa folgende:

In der Schalterstellung "0" sind beide Schalter(S1,S2) geöffnet. In der Schalterstellung "1" ist der Schalter(S1) geschlossen und der Schalter(S2) geöffnet.

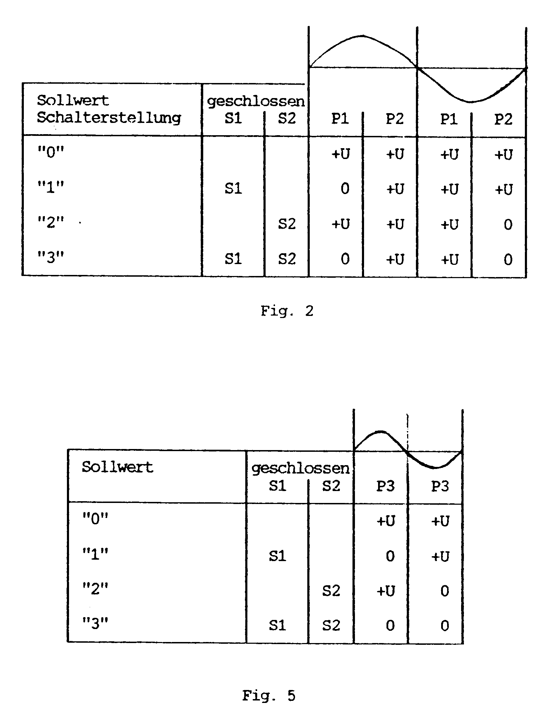

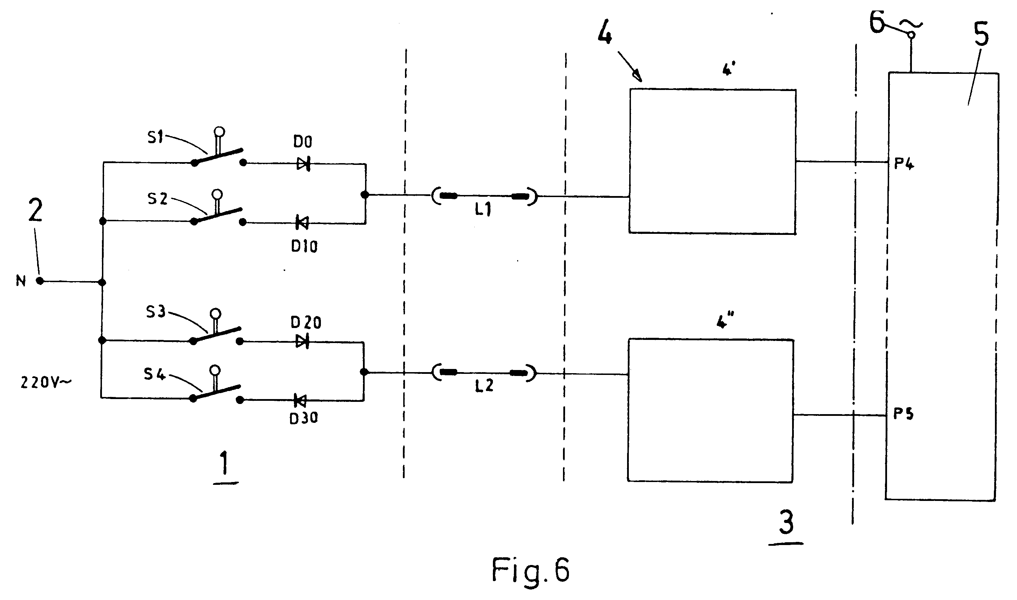

In der Schalterstellung "2" ist der Schalter(S1) geöffnet und der Schalter(S2) geschlossen. In der Schalterstellung "3" sind die Schalter(S1,S2) geschlossen (vgl. Figuren 2 und 5).

In der Schalterstellung "0" wird über die Leitung(L1) keine Halbwelle übertragen. Über die Spannungsteiler(R2 bis R6) liegen dadurch die Eingänge(P1,P2) auf +U und zwar unabhängig, ob in der Netzwechselspannung gerade die positive oder die negative Halbwelle vorliegt.

In der Schalterstellung "1" wird über die Leitung(L1) aufgrund der Polung der Diode(D0) nur die positiven Halbwellen geleitet. Die positive Halbwelle schaltet den Ausgang des Komparators(K1) auf 0. Der Ausgang des Komparators(K2) steht auf +U. Während der negativen Halbwelle liegen beide Eingänge(P1,P2) auf +U (vgl. Figure 2).

In der Schalterstellung "2" werden infolge der Polung der Diode(D10) nur die negativen Halbwellen über die Leitung(L1) übertragen. Der Ausgang des Komparators(K2) schaltet durch die negativen Halbwellen den Eingang(P2) auf 0. Der Komparator(K1) hält den Eingang(P1) auf +U. Während der positiven Halbwelle liegen beide Eingänge(P1,P2) auf +U.

In der Schalterstellung "3" werden sowohl die positiven als auch die negativen Halbwellen über die Leitung(L1) übertragen. Während der positiven Halbwelle schaltet der Komparator(K1) den Eingang(P1) auf 0 und der Komparator(K2) schaltet den Eingang(P2) auf +U. Während der negativen Halbwelle schaltet der Komparator(K1) den Eingang(P1) auf +U. Der Komparator(K2) schaltet den Eingang(P2) auf 0 (vgl. Figur 2). Die vier Schalterstellungen führen also an den Eingängen(P1,P2) zu vier unterschiedlichen Signalkombinationen, wobei hierfür nur eine einzige Leitung(L1) nötig ist. Die zeitrichtige Erfassung der Signalkombinationen ist sichergestellt, da die Auswerteschaltung(5) mit der Netzwechselspannung(N) synchronisiert ist.

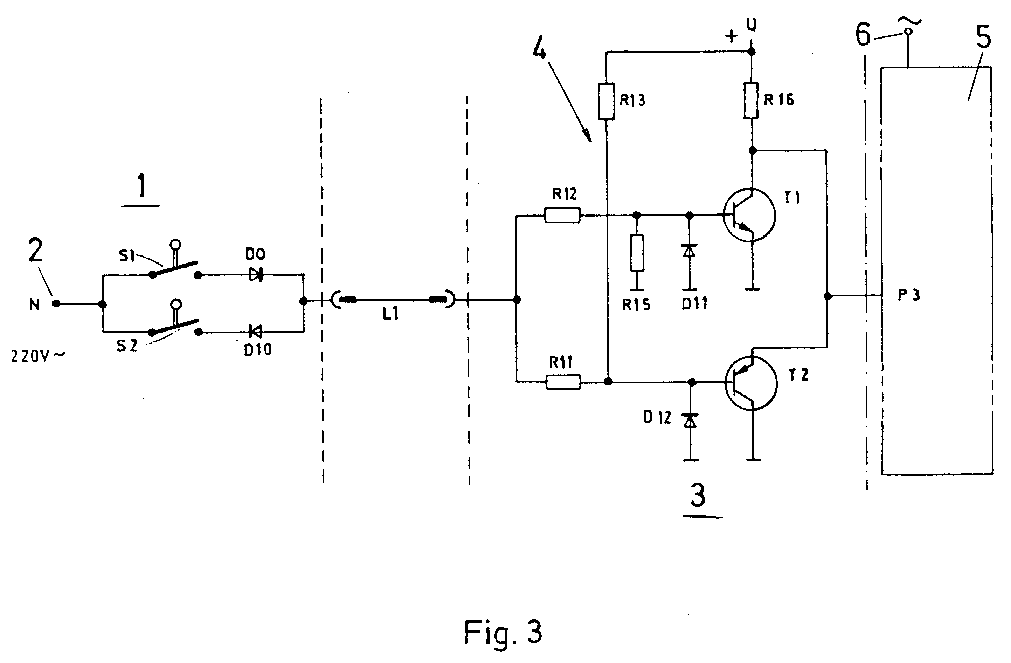

Das erfindungsgemäße Ausführungsbeispiel nach Figur 3 weicht vom Ausführungsbeispiel nach Figur 1 hinsichtlich des Aufbaus der Dekodierschaltung(4) und insofern ab, als hier die Dekodierschaltung(4) mit nur einem einzigen Eingang(P3) der Auswerteschaltung(5) verbunden ist.

Beim Ausführungsbeispiel nach Figur 3 ist ein erster Transistor(T1) vorgesehen, dessen Kollektor über einen Widerstand(R16) an der Betriebsspannung(+U) und an dem Eingang(P3) liegt. Der Emitter des Transistors(T1) ist an Masse geschaltet. Seine Basis ist über einen Widerstand(R12) mit der Leitung(L1) verbunden. Parallel zur Basis-Emitterstrecke des Transistors(T1) sind eine Diode(D11) und ein Widerstand(R15) vorgesehen. Die Diode(D11) schließt negative Halbwellen gegen Masse kurz.

An dem Kollektor des Transistors(T1) liegt der Emitter eines zum Transistor(T1) komplementären Transistors(T2), dessen Kollektor an Masse liegt. Die Basis des Transistors(T2) liegt über einen Widerstand(R11) an der Leitung(L1) und über einen Widerstand(R13) an der Betriebsspannung(+U). Parallel zur Basis-Kollektorstrecke des Transistors(T2) ist eine Diode(D12) geschaltet, die ebenfalls die negativen Halbwellen gegen Masse kurzschließt.

Die Arbeitsweise der Schaltung nach Figur 3 ist etwa folgende (vgl. Figur 5):

Wird über die Leitung(L1) eine positive Halbwelle geleitet, dann wird der Transistor(T1) leitend, so daß der Eingang(P3) auf 0 gesetzt wird. Ansonsten, bei über die Leitung(L1) geleiteten negativen Halbwellen oder keine über die Leitung(L1) geleiteten Halbwellen ist der Transistor(T1) gesperrt.

Bei über die Leitung(L1) ankommenden negativen Halbwellen wird der Transistor(T2) leitend, so daß der Eingang(P3) auf 0 gesetzt wird. Ansonsten ist der Transistor(T2) gesperrt. Es ergeben sich also bei den vier Schalterstellungen die in Figur 5 gezeigten vier unterschiedlichen Signalkombinationen am Eingang(P3).

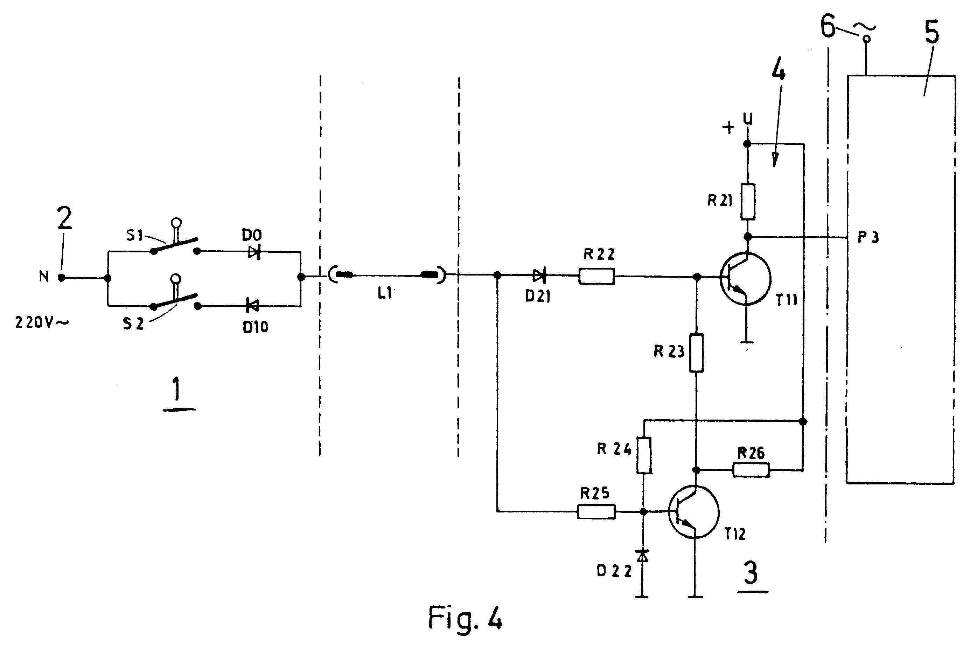

Das Ausführungsbeispiel nach Figur 4 unterscheidet sich vom Ausführungsbeispiel nach Figur 3 nur durch den Aufbau der Dekodierschaltung(4).

Die Dekodierschaltung(4) nach Figur 4 weist einen ersten Transistor(T11) auf, dessen Kollektor über einen Widerstand(R21) an der Versorgungs-Gleichspannung(+UB) liegt. An den Kollektor des Transistors(T11) ist der Eingang(P3) angeschlossen. Sein Emitter liegt an Masse. An der Basis des Transistors(T11) liegt über einen Widerstand(R22) eine Diode(D21), die positive Halbwellen der Leitung(L1) zum Transistor(T11) durchläßt. An die Basis des Transistors(T11) ist außerdem ein Widerstand(R23) angeschlossen, der am Kollektor eines zweiten Transistors(T12) liegt, welcher über einen Widerstand(R26) an die Betriebsspannung(+U) angeschlossen ist. Der Emitter des Transistors(T12) liegt ebenfalls an Masse. Parallel zur Basis-Emitterstrecke des Transistors(T12) ist eine Diode(D22) geschaltet. Die Basis des Transistors(T12) ist außerdem über einen Widerstand(R25) an die Leitung(L1) und über einen Widerstand(R24) an die Betriebspannung(+U) angeschlossen.

Die Funktionsweise der Schaltung nach Figur 4 ist im Endergebnis die gleiche wie die des Ausführungsbeispiels nach Figur 3 (vgl. Figur 5).

Die Arbeitsweise der Schaltung nach Figur 4 ist im einzelnen etwa folgende:

In der Schalterstellung "0" tritt auf der Leitung(L1) keine Halbwelle der Wechselspannung(N) auf. Der Transistor(T11) ist über den Widerstand(R23) von dem über den Widerstand(R24) leitend geschalteten Transistor(T12) gesperrt gehalten. Dadurch liegt am Eingang(P3) das der Betriebsspannung(UB) entsprechende Potential +U ; und zwar sowohl dann wenn am Eingang(6) eine positive Halbwelle der Wechselspannung als auch dann, wenn am Eingang(6) eine negative Halbwelle der Wechselspannung(N) anliegt.

In der Schalterstellung "1" gehen über die Diode(D0) nur die positiven Halbwellen der Wechselspannung(N) auf die Leitung(2). Diese schalten über die Diode(D21) und den Widerstand(R22) den ersten Transistor(T11) leitend, so daß während der positiven Halbwellen am Eingang(P3) 0-potential anliegt. Während der negativen Halbwellen sperren die Dioden(D0,D21), so daß der Transistor(T11) über den Transistor(T12) gesperrt bleibt und am Eingang(P3) +U-Potential ansteht. Hierbei treten also am Eingang(P3) zyklisch ständig die Signale 0, +U; 0, +U; ... auf. Aufgrund ihrer Synchronisation mit der Wechselspannung(N) erkennt die Auswerteschaltung(5), daß das 0-Potential während der positiven Halbwelle und das +U-Potential während der negativen Halbwelle auftritt (vgl. Figur 5). Sie kann dadurch den der Schalterstellung "1" entsprechenden Sollwert steuern.

In der Schalterstellung "2" gelangen über die Diode(D10) nur die negativen Halbwellen auf die Leitung(L1). Diese sperren über den Widerstand(R25) den Transistor(T12), so daß der Transistor(T11) über die Widerstände(R26,R23) nun leitend wird, und durch die negativen Halbwellen der Eingang(P3) auf 0-Potential geschaltet wird. Während der positiven Halbwellen ist die Diode(D10) gesperrt, so daß der Transistor(T11) über den Transistor(T12) gesperrt ist, so daß am Eingang(P3) +U-Potential anliegt (vgl. Figur 5). Am Eingang(P3) liegt also die Signalfolge +U, 0; +U, 0; ... an. Infolge seiner Synchronisation mit der Wechselspannung kann die Auswerteschaltung(5) damit den der Schalterstellung "2" entsprechenden Sollwert verarbeiten.

In der Schalterstellung "3", werden sowohl die positiven als auch die negativen Halbwellen über die Leitung(L1) an die Dekodierschaltung(4) gelegt. Während der positiven Halbwellen wird der Transistor(T11) über die Diode(D21) leitend geschaltet. Während der negativen Halbwellen wird der Transistor über den dabei sperrenden Transistor(T12) und die Widerstände(R26,R23) ebenfalls leitend geschaltet, so daß am Eingang(P3) während beider Halbwellen 0-Potential anliegt (vgl. Figur 5). Diese 0,0; 0, 0;-Signalfolge erkennt die Auswerteschaltung(5) als der Schalterstellung "3" entsprechenden vierten Sollwert.

Die beschriebenen vier Schalterstellungen entsprechen vier vom Programmschaltwerk(1) gesteuerten Sollwerten. Diese können bei Waschmaschinen beispielsweise sein: "Waschen in Rechtsdrehung, Waschen in Linksdrehung, normale Drehzahl, Schleudern."

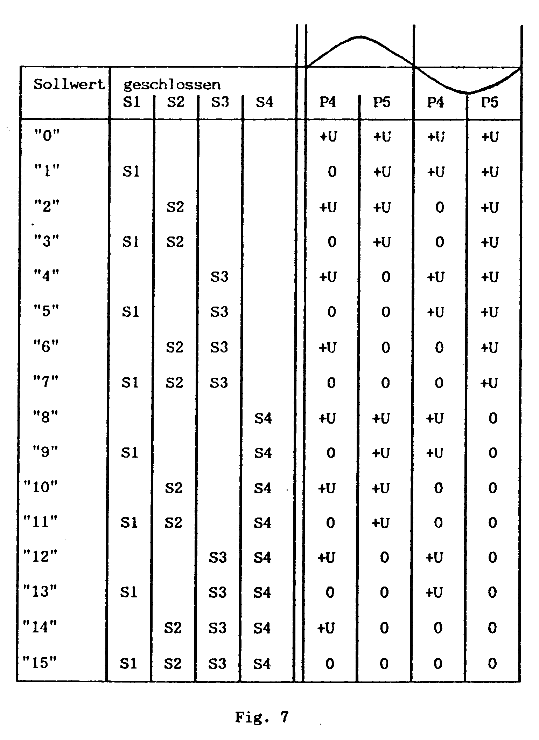

Beim Ausführungsbeispiel nach Figur 6 sind vier vom Programmschaltwerk(1) gesteuerte Schalter(S1 bis S4) dargestellt, die gemeinsam an der Netzwechselspannung(N) liegen. Den Schaltern(S1,S2) sind die Dioden(D0,D10) nachgeschaltet, welche über die Leitung(L1) an der Empfangsschaltung(3) liegen. Den Schaltern(S3,S4) sind Dioden(D20,D30) nachgeschaltet. Die Diode(D20) ist wie die Diode(D0) gepolt. Die Diode(D30) ist wie die Diode(D10) gepolt. Die Dioden(D20,D30) liegen über eine weitere Leitung(L2) an der Empfangsschaltung(3). Mit den vier Schaltern sind 16 verschiedene Schalterstellungen möglich, die in Figur 7 dargestellt sind.

In der Dekodierschaltung(4) ist an jede Leitung(L1,L2) eine eigene Dekodierschaltung(4′, 4˝) angeschlossen, die jeweils an einen Eingang(P4 bzw. P5) der Auswerteschaltung(5) angeschlossen ist. Die Dekodierschaltungen(4′, 4˝) können wie in den Figuren 3 oder 4 dargestellt aufgebaut sein. Es ergeben sich dann bei positiven und negativen Netzhalbwellen an den Eingängen(P4,P5) die in Figur 7 dargestellten Signalkombinationen, wobei jede Signalkombination für eine der 16 Schalterstellungen charakteristisch ist. Mit der in Figur 6 dargestellten Schaltung lassen sich also über nur zwei Leitungen(L1,L2) an nur zwei Eingänge(P4,P5) der Auswerteschaltung(5) 16 verschiedene Signalfolgen übertragen.

Bei entsprechend erweitertem Aufbau der Schaltung ist es möglich, 64 Schalterstellungen über nur drei Leitungen an drei Eingänge der Auswerteschaltung(5) zu übertragen. Dies kann weiter fortgeführt werden.

Zur Verbesserung der Störunempfindlichkeit kann die Auswerteschaltung(5) so ausgelegt sein, daß der Eingang(P1 bis P5) nur im Bereich der Mitte jeder Halbwelle abgefragt wird. Die Widerstände der Dekodierschaltung(4) können so dimensioniert sein, daß die genannten Funktionen erst ab dem etwa halben Spitzenwert der Amplitude der Wechselspannung auftreten.

## Patentansprüche

1. Schaltungsanordnung zur leitungsgebundenen Übertragung von mehreren Sollwerten entsprechenden Schalterstellungen wenigstens eines an Wechselspannung liegenden Schalters (S1,S2) eines elektromechanischen Programmschaltwerks(1) eines Geräts, insbesondere einer Waschmaschine, eines Trockners oder eines Geschirrspülers, auf eine elektronische Auswerteschaltung des Geräts, wobei bei einer ersten Schalterstellung keine Halbwelle der Wechselspannung, bei einer zweiten Schalterstellung nur die positiven Halbwellen der Wechselspannung, bei einer dritten Schalterstellung nur die negativen Halbwellen der Wechselspannung und bei einer vierten Schalterstellung die Vollwellen der Wechselspannung über die gleiche Leitung(L1) an eine der Auswerteschaltung(5) vorgeschaltete Dekodierschaltung(4) übertragen sind, die Dekodierschaltung(4) die empfangenen Halbwellen in digitale Signale umsetzt und die Auswerteschaltung(5) mit der Wechselspannung synchronisiert ist, dadurch gekennzeichnet, daß die Dekodierschaltung(4) einen ersten Transistor(T11) und einen zweiten Transistor(T12) aufweist, die beide an dem gleichen Eingang(P3) der Auswerteschaltung(5) liegen, wobei der erste Transistor(T11) durch die positiven Halbwellen der Leitung(L1) leitend geschaltet ist, und der zweite Transistor(T12) durch die negativen Halbwellen der Leitung(L1) gesperrt ist, und der sperrende zweite Transistor(T12) den ersten Transistor(T11) leitend schaltet.

2. Schaltungsanordnung zur leitungsgebundenen Übertragung von mehreren Sollwerten entsprechenden Schalterstellungen wenigstens eines an Wechselspannung liegenden Schalters (S1,S2) eines elektromechanischen Programmschaltwerks(1) eines Geräts, insbesondere einer Waschmaschine, eines Trockners oder eines Geschirrspülers, auf eine elektronische Auswerteschaltung des Geräts, wobei bei einer ersten Schalterstellung keine Halbwelle der Wechselspannung, bei einer zweiten Schalterstellung nur die positiven Halbwellen der Wechselspannung, bei einer dritten Schalterstellung nur die negativen Halbwellen der Wechselspannung und bei einer vierten Schalterstellung die Vollwellen der Wechselspannung über die gleiche Leitung(L1) an eine der Auswerteschaltung(5) vorgeschaltete Dekodierschaltung(4) übertragen sind, die Dekodierschaltung(4) die empfangenen Halbwellen in digitale Signale umsetzt und die Auswerteschaltung(5) mit der Wechselspannung synchronisiert ist, dadurch gekennzeichnet, daß die Dekodierschaltung(4) einen ersten Transistor(T1) und einen kompementären zweiten Transistor(T2) aufweist, die beide an dem gleichen Eingang(P3) der Auswerteschaltung(5) liegen, wobei der erste Transistor(T1) bei positiven Halbwellen leitend schaltet und der zweite Transistor(T2) bei negativen Halbwellen leitend schaltet.

3. Schaltungsanordnung nach Anspruch 1 oder 2, dadurch gekennzeichnet, daß vor der Leitung(L1) am Programmschaltwerk(1) für die Übertragung der Schalterstellungen umgekehrt gepolte Dioden(D0,D10) liegen.

4. Schaltungsanordnung nach einem der vorhergehenden Ansprüche, dadurch gekennzeichnet, daß der erste Transistor(T11) gesperrt ist, solange keine Halbwelle über die Leitung(L1) auf die Dekodierschaltung(4) gelangt.

5. Schaltungsanordnung nach einem der vorhergehenden Ansprüche, dadurch gekennzeichnet, daß der bzw. die mit der Dekodierschaltung(4) verbundenen Eingänge(P1,P2,P3) der Auswerteschaltung(5) deren Signale nur im Bereich der Mitte jeder Halbwelle auswertet.

6. Schaltungsanordnung nach einem der vorhergehenden Ansprüche, dadurch gekennzeichnet, daß für die Übertragung von bis 16 bzw. 64 Schalterstellungen zwei (L1,L2) bzw. drei Leitungen(L1,L2,L3) vorgesehen sind.

7. Schaltungsanordnung nach einem der vorhergehenden Ansprüche, dadurch gekennzeichnet, daß für die Übertragung von 16 Schalterstellungen vier an der Wechselspannung(N) liegende Schalter(S1 bis S4) vorgesehen sind, wobei die einen zwei Schalter(S1,S2) über gegensinnig gepolte Dioden(D0,D10) an der einen Leitung(L1) liegen und die anderen zwei Schalter(S3,S4) über gegensinnig gepolte Dioden(D20,D30) an der zweiten Leitung(L2) liegen.

## Claims

1. Circuit arrangement for the guided transmission of a plurality of switch positions corresponding to reference valves of at least one switch (S1,S2), which is under alternating voltage, of an electromechanical programmed switchgear (1) of an appliance, in particular of a washing machine, dryer, or dishwasher, to an electronic evaluation circuit of the appliance, wherein in a first switch position no half-wave of the alternating voltage is transmitted, in a second switch position only the positive half-waves of the alternating voltage are transmitted, in a third switch position only the negative half-waves of the alternating voltage are transmitted, and in a fourth switch position the full waves of the alternating voltage are transmitted via the same line (L1) to a decoding circuit (4) connected upstream of the evaluating circuit (5), the decoding circuit (4) converts the half-waves received into digital signals, and the evaluation circuit (5) is synchronised with the alternating voltage, characterised in that the decoding circuit (4) has a first transistor (T11) and a second transistor (T12), both of which lie at the same input (P3) of the evaluation circuit (5), the first transistor (T11) being connected conductively by the positive half-waves of the line (L1), and the second transistor (T12) being locked by the negative half-waves of the line (L1), and the locking second transistor (T12) conductively connecting the first transistor (T11).

2. Circuit arrangement for the guided transmission of a plurality of switch positions corresponding to reference values of at least one switch (S1,S2), which is under alternating voltage, of an electromechanical programmed switchgear (1) of an appliance, in particular of a washing machine, dryer, or dishwasher, to an electronic evaluation circuit of the appliance, wherein in a first switch position no half-wave of the alternating voltage is transmitted, in a second switch position only the positive half-waves of the alternating voltage are transmitted, in a third switch position only the negative half-waves of the alternating voltage are transmitted, and in a fourth switch position the full waves of the alternating voltage are transmitted via the same line (L1) to a decoding circuit (4) connected upstream of the evaluating circuit (5), the decoding circuit (4) converts the half-waves received into digital signals, and the evaluation circuit (5) is synchronised with the alternating voltage, characterised in that the decoding circuit (4) has a first transistor (T1) and a complementary second transistor (T2), both of which lie at the same input (P3) of the evaluation circuit (5), the first transistor (T1) being connected conductively in the case of positive half-waves and the second transistor (T2) being conductively connected in the case of negative half-waves.

3. Circuit arrangement according to claim 1 or 2, characterised in that upstream of the line (L1), inversely polarised diodes (D0, D10) are provided on the programmed switchgear (1) for transmitting the switch positions.

4. Circuit arrangement according to one of the preceding claims, characterised in that the first transistor (T11) is locked for as long as no half-waves are passing via the line (L1) to the decoding circuit (4).

5. Circuit arrangement according to one of the preceding claims, characterised in that the input or inputs (P1,P2,P3) of the evaluation circuit (5) connected to the decoding circuit (4) evaluates or evaluate its signals only in the region of the centre of each half-wave.

6. Circuit arrangement according to one of the preceding claims, characterised in that two (L1,L2) or three lines (L1,L2,L3) respectively are provided for transmitting up to 16 or 64 switch positions respectively.

7. Circuit arrangement according to one of the preceding claims, characterised in that, for transmitting 16 switch positions, four switches (S1 to S4) under alternating voltage (N) are provided, one set of two switches (S1,S2) following one of the lines (L1) via diodes (D0,D10) polarised in opposite directions, and the other two switches (S3,S4) following the second line (L2) via diodes (D20, D30) polarised in opposite directions.

## Revendications

1. Structure de circuit pour la transmission par ligne de plusieurs positions d'interrupteurs correspondant aux valeurs de consigne d'au moins un interrupteur (S1, S2) appliqué à la tension alternative d'un programmateur électromécanique (1) d'un appareil, tel qu'un lavelinge, un sèche-linge ou un lave-vaisselle, à un circuit d'exploitation électronique de l'appareil, structure dans laquelle on transmet, par la même ligne (L1) à un circuit décodeur (4) monté en série avec le circuit d'exploitation (5), dans la première position d'interrupteur aucune demi-onde de la tension alternative, dans une seconde position d'interrupteurs seules les demiondes positives de la tension alternative, dans une troisième position d'interrupteurs seules les demi-ondes négatives de la tension alternative et dans une quatrième position d'interrupteurs les ondes pleines de la tension alternative, structure dans laquelle le circuit décodeur (4) convertit les demi-ondes reçues en signaux numériques et où le circuit d'exploitation (5) est synchronisé avec la tension alternative, caractérisée en ce que le circuit décodeur (4) présente un premier transistor (T11) et un second transistor (T12) qui sont appliqués tous les deux à la même entrée (P3) du circuit d'exploitation, le premier transistor (T11) étant connecté sur conducteur par les demi-ondes positives de la ligne (L1) et le second transistor (T12) étant bloqué par les demi-ondes négatives de la ligne (L1), et en ce que le second transistor bloqueur (T12) commute le premier transistor (T11) sur conducteur.

2. Structure de circuit pour la transmission par ligne de plusieurs positions d'interrupteurs correspondant aux valeurs de consigne d'au moins un interrupteur (S1, S2) appliqué à la tension alternative d'un programmateur électromécanique (1) d'un appareil, tel qu'un lavelinge, un sèche-linge ou un lave-vaiselle à un circuit d'exploitation électronique de l'appareil, structure dans laquelle on transmet par la même ligne (L1) à un circuit décodeur (4) monté en série avec le circuit d'exploitation (5), dans la première position d'interrupteurs aucune demi-onde de la tension alternative, dans une seconde position d'interrupteurs seules les demi-ondes positives de la tension alternative, dans une troisième position d'interrupteurs seules les demi-ondes négatives de la tension alternative et dans une quatrième position d'interrupteurs les ondes pleines de la tension alternative, structure dans laquelle le circuit décodeur (4) convertit les demi-ondes reçues en signaux numériques et où le circuit d'exploitation (5) est synchronisé avec la tension alternative, caractérisée en ce que le circuit décodeur (4) présente un premier transistor (T1) et un transistor complémentaire (T2), qui sont appliqués tous les deux à la même entrée (P3) du circuit d'exploitation (5), le premier transistor (T1) étant commuté sur conducteur par les demi-ondes positives et le second transistor (T2) étant commuté par les demi-ondes négatives sur conducteur.

3. Structure de circuit selon la revendication 1 ou 2, caractérisée en ce que pour la transmission des positions d'interrupteurs, des diodes à polarisation inversée (D0, D10) sont appliquées au programmateur (1) devant la ligne (L1).

4. Structure de circuit selon l'une des revendications précédentes caractérisée en ce que le premier transistor (T11) est bloqué tant qu'aucune demi-onde ne parvient, par l'intermédiaire de la ligne (L1), au circuit décodeur (4).

5. Structure de circuit selon l'une des revendications précédentes, caractérisée en ce que l'entrée, à savoir les entrées (P1, P2, P3) du circuit d'exploitation (5) reliées au circuit décodeur (4), évalue ses signaux seulement dans la zone médiane de chaque demi-onde.

6. Structure de circuit selon l'une des revendications précédentes, caractérisée en ce que pour la transmission des 16, voire 64 positions d'interrupteurs, il est prévu deux lignes (L1, L2), voire trois lignes (L1 L2, L3).

7. Structure de circuit selon l'une des revendications précédentes caractérisée en ce que pour la transmission de 16 positions d'interrupteurs, il est prévu quatre interrupteurs (S1 à S4) appliqués à la tension alternative (N), les deux premiers interrupteurs (S1, S2) sont reliés à la première ligne (L1) par l'intermédiaire de diodes (D0, D10) à polarisation contraire et les deux autres interrupteurs (S3, S4) sont reliés à la seconde ligne (L2) par l'intermédiaire de diodes (D20, D30) à polarisation contraire.
